# EUROPEAN PATENT SPECIFICATION

(11) **EP 1 434 290 B1**
(45) Date of publication and mention of the grant of the patent: **14.07.2010**
(21) Application number: 02798835.1
(22) Date of filing: 13.09.2002
(51) Int. Cl.: H01M 4/32, H01M 4/26, H01M 4/52, H01M 4/62, H01M 10/34

(54) **ACTIVE MATERIAL FOR CELL AND ITS MANUFACTURING METHOD**
AKTIVES MATERIAL FÜR ZELLEN UND VERFAHREN ZU SEINER HERSTELLUNG
MATERIAU ACTIF POUR CELLULE ET PROCEDE DE FABRICATION CORRESPONDANT

(30) Priority: 17.09.2001 JP 2001280847; 17.09.2001 JP 2001280848; 17.09.2001 JP 2001280849; 19.09.2001 JP 2001284490
(43) Date of publication of application: 30.06.2004
(73) Proprietor: KAWASAKI JUKOGYO KABUSHIKI KAISHA, Kobe shi, Hyogo 650-8670 (JP); OSAKA GAS CO., LTD., Osaka-shi, Osaka 541-0046 (JP)
(72) Inventor: TSUTSUMI, Kazuo, Kobe-shi, Hyogo 651-2215 (JP); NISHIMURA, Kazuya, Tarumi-ku Kobe-shi Hyogo 655-0873 (JP); MITSUDA, Susumu, Hikami-gun, Hyogo 669-3122 (JP)
(74) Representative: Whitlock, Holly Elizabeth Ann
(86) International application number: PCT/JP2002/009408
(87) International publication number: WO 2003/026046

(56) References cited:
- EP-A- 0 170 573
- EP-A1- 0 028 072
- EP-A1- 0 930 663
- EP-A2- 0 732 761
- WO-A1-00/59062
- GB-A- 1 041 428
- JP-A- 1 241 755
- JP-A- 1 267 956
- JP-A- 3 165 461
- JP-A- 4 022 063
- JP-A- 5 054 883
- JP-A- 7 153 454
- JP-A- 8 167 411
- JP-A- 9 063 568
- JP-A- 9 073 897
- JP-A- 11 007 960
- JP-A- 49 129 139
- JP-A- 50 145 836
- JP-A- 52 028 628
- JP-A- 52 092 337
- JP-A- 52 098 938
- JP-A- 52 098 941
- JP-A- 52 149 335
- JP-A- 53 051 449
- JP-A- 53 076 330
- JP-A- 58 123 660
- JP-A- 58 225 564
- JP-A- 2001 176 553
- JP-A- 2001 236 956
- US-A- 3 317 347
- US-A- 3 640 772
- US-A- 3 725 129

## Description

### [Technical Field]

The present invention relates to active material products for battery for use in a chargeable and dischargeable three-dimensional battery obtained by forming the active material products in the shape of particle, plate, bar, or the like, and filling the active material products in the battery, and a production method thereof.

### [Background Art]

The present invention relates to a three-dimensional battery.

An objective is to provide highly electrically conductive active material products for battery that can be suitably used as active material products for the three-dimensional battery, and a production method thereof. Hereinbelow, the objective will be described according to comparison with the prior art.

### 1. Prior Art

JP 2000 277 183 discloses a so-called three-dimensional battery comprising powdery or particulate active material. Also, pamphlet of International Publication No. WO 00/59062 discloses a layered three-dimensional battery.

As a chargeable and dischargeable three-dimensional battery, a nickel-hydrogen secondary battery comprising nickel hydroxide as a cathode active material and hydrogen-occluding alloy as an anode active material is known. In the chargeable and dischargeable three-dimensional battery, metal such as hydrogen-occluding alloy used as the anode active material becomes usable just after being filled, because such metal is electrically conductive. On the other hand, nickel hydroxide used as the cathode active material is non-electrically conductive, and therefore does not conduct a current. That is, nickel hydroxide itself does not become a battery.

Accordingly, various devices have been made to give conductivity to the cathode active material such as nickel hydroxide. In general, electrically conductive material is added to nickel hydroxide. Specifically, the electrically conductive material is added to the active material, and the resulting active material is filled in metallic felt. The active material is pressed into the felt so as to be thin. A distance between the active material and current collector is made small, and a contact area between them is increased. Specifically, this is performed as follows.

Electrically conductive material such as electrically conductive cobalt hydroxide or carbon particles is added to nickel hydroxide, and binder such as polyvinyl alcohol (PVA) is further added. The resulting mixture is converted into a paste by using water and alkaline solution, and filled and impregnated into metallic Ni porous felt for the purpose of increasing conductivity. A two-dimensional planar structure is employed to ensure contact between the active material and the current collector. Since the filled active material peels off or falls off from the Ni porous forming products in the alkaline solution and is insufficiently in contact with the porous forming products, the active material and the conductor have a layered structure, or are wound to be dense, thus maintaining conductivity and shape.

Since the thin cathode active material that gains conductivity as described above and the current collector are layered, it is necessary to increase its area to increase its capacity. But, since the active material having a larger area is difficult to layer, scale up is difficult to achieve in a single battery. So, in order to obtain a large-sized battery, the number of batteries is typically increased, which leads to a high cost. Also, the active material created as described above tends to peel off or to be deformed, and therefore cannot be used as the active material for three-dimensional battery which is obtained by filling particulate active material in an electrode vessel and easily enables scale-up.

As described above, in the nickel-hydrogen battery, the non-electrically conductive cathode active material gains conductivity by adding electrically conductive filler such as carbon fine powder and PVA as the binder and by filling and impregnating it in the porous Nickel felt. However, when the active material with the electrically conductive filler added is shaped and solidified by a general binder such as PVA, PVA is dissolved and decomposed, and thereby deformed, and the active material forming products collapse and hence cannot maintain conductivity, if the active material is immersed in the alkaline solution containing electrolyte dissolved therein. Such active material products are problematic for use as the active material products for battery.

When only the active material is shaped by water-insoluble resin without use of porous Ni felt, instead of filling nickel hydroxide with water-soluble PVA added as the binder in the porous Ni felt, the active material is non-electrically conductive and is incapable of charge and discharge.

Conventionally, by impregnating an active material mixture in a slurry state comprising nickel hydroxide, electrically conductive medium, and binder such as PVA in the porous Ni felt, an electrically conductive active material sheet can be created. However, if the active material mixture is densely filled in the porous Ni felt, a sufficiently thick sheet is not obtained. For example, the active material and the electrically conductive material are filled and pressed into the porous Ni felt of 1.3mum to be formed into a sheet of approximately of 0.5mm. The sheet is cut into small pieces to obtain electrically conductive active material which is in the shape of particle, and small angular matte.

However, in a case where these small pieces are filled in electrode vessel as the active material, cut end portions have sharp cross-sections peculiar to porous Ni felt metal, so that when the battery is constituted, a separator between electrodes would be damaged to thereby cause cathode vessel and anode vessel to be connected to each other, thereby resulting in electric short. Since PVA used as the binder is water-soluble and hence soluble in the alkaline electrolytic solution, the active material peels off from the Ni felt. In a method using this in a particulate filled layer, battery performance would be degraded soon.

On the other hand, in the nickel-hydrogen three-dimensional battery, since hydrogen-occluding alloy as the anode active material is metal and electrically conductive, this becomes usable just after being filled. Nonetheless, the hydrogen-occluding alloy is converted into powder composed of fine particles, after repeated charge and discharge. Since conductivity of a particulate layer of hydrogen-storing metal powder is low, Ni metal power or the like as conduction promoter is mixed with the particulate layer and put into a space between the separator and the electrode and used so as to inhibit hydrogen-occluding alloy from being converted into powder. In metal composed of fine particles, the powdery layer has a high resistance, and loss of a power increases herein. While the cathode and the anode are defined by a porous separator which an electrolytic solution permeates, the cathode and the anode become electrically conductive if fine particle powder on anode side travel to the cathode through holes of the separator. In order to avoid this, a separator that is expensive and has fine holes, is used, or the battery active material is restricted under pressure between the electrode and the separator in order to inhibit the active materials from traveling between the anode and the cathode. Therefore, particles of the hycliogen-occluding alloy powdered due to charge and discharge must maintain conductivity, and fine particles must be inhibited from falling off the particles and traveling through large holes of the separator, such as a general non-woven fabric.

The present invention has been developed under the circumstances, and an objective to be achieved by the present invention is to provide active material products for battery for allowing conductivity to be given to a material such as nickel hydroxide used as a cathode active material, forming products of the active material being ion-permeable and capable of maintaining a shape and conductivity without collapse in an alkaline electrolytic solution in a chargeable and dischargeable three-dimensional battery obtained by forming the active material products in the shape of particle, plate, or bar and filling the same material, and a production method thereof.

An objective to be achieved by the present invention is to provide active material products for battery, in which a material such as hydrogen-occluding alloy used as an anode active material is created into particles by using resin, thereby inhibiting fine-powdering and collapse of active material particles, maintaining high conductivity, and inhibiting fine particles from falling off the particles, the active material products enabling the use of a separator for battery having holes of 10µm or larger such as an inexpensive non-woven fabric, and a production method thereof.

In addition, an objective to be achieved by the present invention is to provide a method of producing active material products for battery, in which a mixture of the resin, the active material powder, and the electrically conductive filler is formed in the shape of particle, plate and bar, by press forming, extrusion molding, or tablet making, thereby obtaining electrically conductive cathode active material products and electrically conductive anode active material products, and the active material powder is formed into particles by using thermoplastic resin dissolved in an organic solvent, thereby obtaining the electrically conductive cathode active material products and the electrically conductive anode active material products simply and efficiently by agitation and particle formation.

Further, an objective to be achieved by the present invention is to provide active material products for three-dimensional battery capable of achieving scale up in a single battery by forming products of the cathode active material and of the anode active material having the above-mentioned capability.

The following Patents and Published Patent applications relate to batteries; EP0930663A, EP0170573A; JP53051449A; JP52098938A; US3640772A; US3317347A; JP52028628; JP03165461A; EP0732761A; JP52098941A; JP52092337A; JP53076330; GB1041428A; US3725129A; JP52149335A; WO0059062A; EP1174939A; JP2001236956A; JP1241755A; JP9063568A; EP0028072A; JP1267956A; JP11007960A; JP4022063A, JP8167411A; JP5054883A; JP7153454A; and JP58123660A.

### [Disclosure of the Invention]

According to one aspect of the present invention, there is provided a method of producing active material products for battery for use in a three-dimensional battery comprising two vessels connected to each other with a member interposed therebetween, and electrically conductive current collectors provided within the two vessels in contact with active material particles or active material forming products contained in electrolytic solutions filled in the two vessels, the member being configured to permit passage of an ion and not to permit passage of an electron, and the active material particles or the active material forming products filled in the electrolytic solution in one of the two vessels being adapted to discharge electrons and the active material particles or the active material forming products filled in the electrolytic solution in the other vessel being adapted to absorb the electrons, the method comprising: adding a water-soluble compound besides electrically conductive filler and a resin to an active material powder, and forming and curing the active material powder in a shape of particle, plate, or bar to obtain particulate, plate-shaped or bar-shaped active material products, and dissolving the water-soluble compound in water, and extracting and removing the water-soluble compound, thereby forming pores in the active material forming products.

According to another aspect of the present invention, there is provided a method of producing active material products for battery for use in a three-dimensional battery comprising two vessels connected to each other with a member interposed therebetween, and electrically conductive current collectors provided within the two vessels in contact with active material particles or active material forming products contained in electrolytic solutions filled in the two vessels, the member being configured to permit passage of an ion and not to permit passage of an electron, and the active material particles or the active material forming products filled in the electrolytic solution in one of the two vessels being adapted to discharge electrons and the active material particles or the active material forming products filled in the electrolytic solution in the other vessel being adapted to absorb the electrons, the method comprising: adding particles of a compound, which is converted into an electrolyte in the battery, besides electrically conductive filler and resin to an active material powder and forming and curing the active material powder in a shape of particle, plate, or bar to obtain particulate, plate-shaped or bar-shaped active material products and forming pores in the active material forming products by the dissolution of the electrolyte in the electrolytic solution or water when the active material products are used for the battery.

In the above constitution, the active material powder may be nickel hydroxide powder. The nickel hydroxide powder may comprise nickel hydroxide and cobalt compound such as cobalt hydroxide or carbon particles.

A coating layer comprising at least any one of a nickel-plated layer, carbon fibers, nickel-plated carbon fibers, nickel-plated carbon particles, nickel-plated organic fibers, fibrous nickel, nickel particles and nickel foil may be formed on a surface of the active material forming products for battery.

The nickel hydroxide powder may be obtained from a precipitate of nickel hydroxide and cobalt hydroxide obtained by neutralizing a mixed solution containing nickel salt and cobalt salt by alkali. Also, the nickel hydroxide powder may be obtained from a mixture comprising a precipitate of nickel hydroxide and carbon particles which is obtained by neutralizing a nickel salt solution with carbon particles suspended therein by alkali. Further, the nickel hydroxide powder may be obtained from a mixture of nickel hydroxide and cobalt hydroxide and carbon particles which are precipitated by neutralizing a mixed solution containing nickel salt and a minute amount of cobalt salt with carbon particles suspended therein by alkali.

The active material particles may be formed and cured by tablet making or tablet forming. The particulate, plate-shaped, or bar-shaped active material products with high density is obtained by pressurized forming. The bar-shaped active material products are formed by extrusion molding. When using the tablet making, the tablet forming, the pressurized-forming, or the extrusion molding, the particulate active material products may be formed by crushing the formed active material products.

Since the present invention is constituted as described above, the following remarkable effects are provided.
1) The active material products do not collapse in the alkaline electrolytic solution. The active material forming products or particles can have conductivity and ion permeability. When the active material products are used in the three-dimensional battery, the active material products can keep conductivity
2) By solidifying the active material particles by using resin, the fine powder does not fall off. Therefore, as a separator for battery, for example, inexpensive non-woven fabric provided with large holes, may be used.
3) By using the thermoplastic resin dissolved in the organic solvent, the particulate active material can be easily produced by agitation.
4) It is possible to obtain active material products for battery capable of easily scale up in a single battery.
5) The particulate active material products can be easily filled a space between an electrode and a separator. And, without a need to disassemble the battery, only the active material products can be discharged and easily recovered for recycling.

### [Brief Description of the Drawings]

Fig. 1 is a cross-sectional view showing a schematic structure of an example of a battery comprising a cathode particulate active material products and an anode particulate active material products;
Fig. 2(a) is a perspective view showing an example of a tester of a layered three-dimensional battery and Fig. 2(b) is a central longitudinal sectional view schematically showing the three-dimensional battery; and
Fig. 3 is a perspective view partially showing main components before assembling the tester (in a disassembled state) of the layered three-dimensional battery in Fig. 2.

### [Best Mode for Carrying Out the Invention]

Hereinafter, embodiments of the present invention will be described. The present invention is not limited to the embodiments described below but may be suitably altered and carried out.

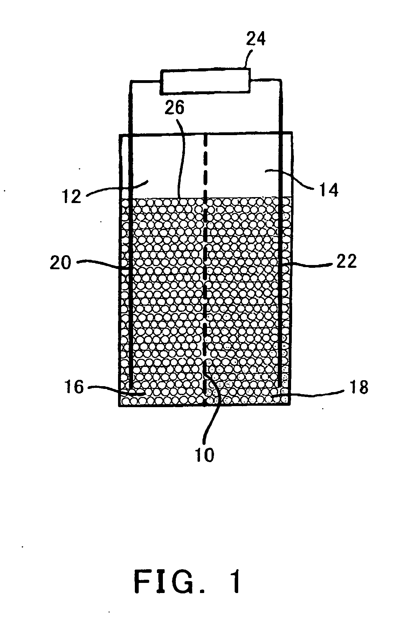

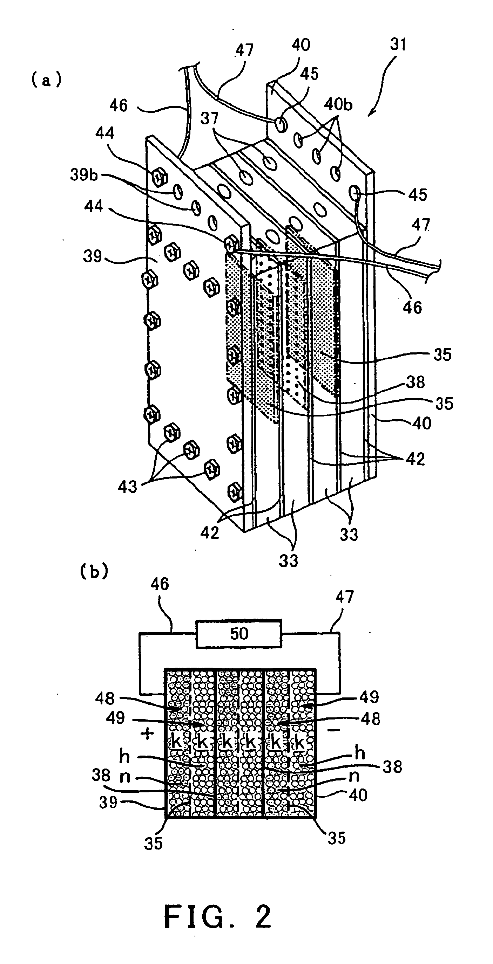

First of all, a schematic structure of a three-dimensional battery will be described. Fig. 1 is a cross-sectional view showing a schematic structure of an example of a battery comprising a cathode particulate active material products and an anode particulate active material products. As shown in Fig. 1, an anode cell 12 and a cathode cell 14 are provided with an ion-permeable filter (separator) 10 interposed between them. The anode cell 12 is filled with an electrolytic solution and an anode particulate active material products 16. The cathode cell 14 is filled with an electrolytic solution and a cathode particulate active material products 18. The particulate active material products exist within the electrolytic solutions as fixed layers. In Fig. 1 and Fig. 2 to be described later, the size of the particulate active material products are equal for the convenience, but actually, differ from each other, as a matter of course.

The separator 10 is an electrically-insulative. The separator 10 serves as an ion-passing membrane and does not serves as a particle-passing membrane. As the separator 10, an unglazed battery, an ion exchange resin membrane, a polymer fibers, or the like is used.

An anode current collector 20 comprising a conductor and a cathode current collector 22 comprising a conductor are respectively provided in the anode cell 12 and the cathode cell 14, respectively. The current collectors 20 and 22 are connected to a load means (for discharge) or to a power generation means 24 (for charge). Reference numeral 26 denotes an electrolytic solution interface.

Subsequently, mechanism of charge and discharge of the battery of this embodiment will be described.

### (Charge)

A voltage is applied to the battery and an electron is supplied from the anode current collector 20. The electron reacts with the anode particulate material immediately on the anode current collector 20 or while traveling through the anode particulate material. An ion produced by the reaction passes through the separator 10 and enters the cathode cell 14, where it reacts with the cathode particulate active material products and discharges the electron. The electron moves to the cathode current collector 22 immediately or through the particulate active material products and is supplied to the power generation means 24.

### (Discharge)

A load is applied to the battery and an electron is supplied from the anode current collector 20. The electron reacts with the positively ionized material immediately on the anode current collector 20 or while traveling through the anode particulate material within the anode cell 12. An ion produced by the reaction passes through the separator 10 and enters the cathode cell 14, where it reacts with the cathode particulate active material products and the electron. The electron moves to the cathode current collector 22 immediately or through the particulate active material products and is supplied to the load means 24.

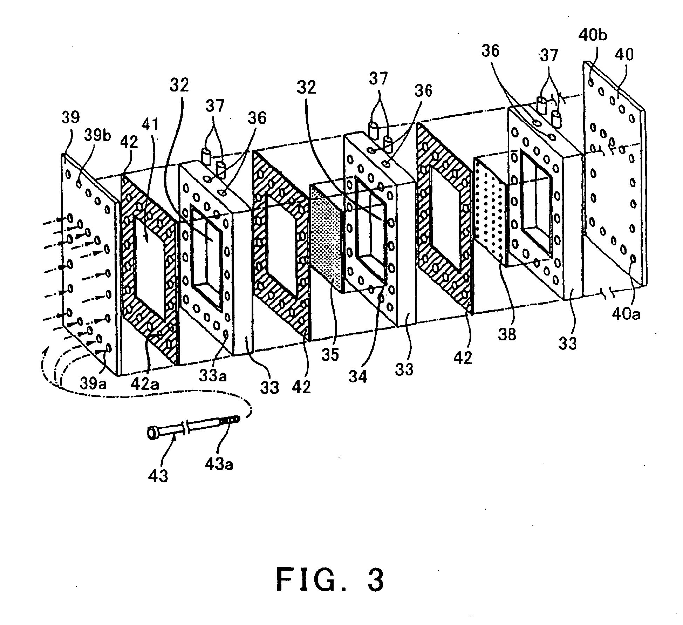

Figs. 2(a) and 2(b) are a perspective view and a schematic cross-sectional view showing an example of a tester of a layered three-dimensional battery, and Fig. 3 is a perspective view partially showing main components before assembling of the tester (in a disassembled state) of the layered three-dimensional battery.

As shown in Fig. 2, a layered three-dimensional battery 31 is a nickel-hydrogen battery. As shown in Fig. 3, the battery 31 is structured to have a pair of two cell (vessel) members 33 each having a square central opening 32 penetrating therethrough in a thickness direction thereof. In this example, two pairs (four in total) cell members 33 are provided. A shallow (in this example, 0.5mm deep) concave portion 34 is formed annularly at a periphery of an opening 32 of each of the cell members 33. A substantially-square and alkali-resistant ion-permeable separator 35 is fitted in the concave portion 34 between the cell members 33. The separator 35 is a membrane which permits only ions to pass therethrough but does not permit the active material products and electron to pass therethrough. Two injection ports 36 through which an electrolytic solution is injected are formed in an upper surface of each of the cell members 33 such that they vertically penetrate toward the opening 32 and are spaced apart from each other in the width direction thereof. Rubber plugs 37 are removably attached to the respective injection ports 36.

A substantially-square, alkali-resistant, electrically conductive, and plate-shaped current collector 38 is fitted into the concave portion 34 between the cell members 33 in each pair. Alkali-resistant and electrically conductive current collectors 39 and 40 are provided on both ends of the two pairs of the cell members 33 and have a width as large as that of the cell members 33 and a height larger than that of the cell members 33. Rubber packings 42 are respectively interposed between the cell members 33, between the cell member 33 and the current collector 39, and the cell member 33 and collector 40. The rubber packings 42 have openings 41 shaped identically to the openings 32 in central portions thereof and have outer shapes identical to those of the cell members 33. A plurality of insertion holes 33a, 42a, 39a, 40a are formed around the openings 32 and 41 in the cell members 33, the packings 42, and the current collectors 39 and 40 such that these holes penetrate in the thickness directions thereof and are spaced along their peripheries. Non-electrically conductive bolts 43 are inserted through the plurality of insertion holes 33a, 42a, 39a, 40a and nuts (not shown) are securely screwed to tip screw portions 43a of the bolts 43. Small holes 39b and small holes 40b are respectively formed at upper end portions of the left-end (cathode) and right-end (anode) current collectors 39 and 40 such that these holes are spaced in the width directions thereof. In this example, cathode terminals 44 and anode terminals 45 are respectively fitted to the small holes 39b of the left-end current collector 39 and the small holes 40b of the right-end current collector 40 and one end portions of wirings 46 and 47 are connected to these terminals.

A potassium hydroxide solution k as the electrolytic solution is injected into each of the cell members 33 through the injection ports 36. Nickel hydroxide n as the cathode particulate active material products, hydrogen-occluding alloy has the anode particulate active material products, nickel hydroxide n as the cathode particulate active material products, hydrogen-occluding alloy has the anode particulate active material products are put into the potassium hydrogen aqueous solution k sequentially from the left-end cell member 33 of Fig. 2(b). As a result, from the left end to the right end in Fig. 2(b), a cathode cell 48, an anode cell 49, the cathode cell 48, and the anode cell 49 are sequentially formed. Reference numeral 50 denotes a load means (for discharge) or a power generation means (for charge).

Particulate active material products used in the above-mentioned three-dimensional battery is produced in such a manner that electrically conductive filler and resin as a binder are added to active material powder which becomes active material products and the resulting active material products is shaped and cured. For example, in the case of the nickel-hydrogen secondary battery, nickel hydroxide used as the cathode is non-electrically conductive, and therefore, the electrically conductive filler is mixed with nickel hydroxide powder to allow the active material products to gain conductivity. As the electrically conductive filler, carbon particles, carbon fibers, Ni metal particles, Ni metal fibers, Ni metal foil, Ni-plated particles, Ni-plated fibers may be used. The use of the particulate material as the electrically conductive filler allows ions to permeate through gap between the nickel hydroxide and the electrically conductive filler. More preferably, electrically conductive fiber filler is used, because active material forming products has some clearance due to spring back under a pressure-released state during pressure formation, through which ions travel, thus facilitating ion exchange. Also, a high internal resistance of the battery causes a loss of the voltage, and a large loss of the voltage is problematic. For example, by setting conductivity of the electrically conductive material to have a volume resistance of 5 Ω / cm³ or less, resistance can be set to 0.05Ω or less in an electrode of 10cm square and an active material electrode of 1cm thickness.

The nickel hydroxide powder may be a precipitate of nickel hydroxide and cobalt hydroxide. Industrial nickel hydroxide is composed of spherical particles of approximately 10µm for increasing filling density. A mixture of nickel hydroxide contains Co compound of approximately 1% and some other components. It is said that Co(OH)2 is converted into CoOOH by charge, which exhibits conductivity. Ni (OH)₂ is obtained by neutralizing Ni acid solution with alkali and precipitating the resulting hydroxide. In this case, a mixed solution of Ni and Co is neutralized with alkali and Ni(OH)₂ and Co(OH)₂ are both precipitated.

Carbon fine particles are suspended in the Ni acid solution and neutralized, thereby producing particles with Ni(OH)₂ attached around carbon fine particles or a precipitate of a mixture of carbon fine particles and Ni(OH)₂. Since the carbon fine particles have high conductivity, highly electrically conductive nickel hydroxide powder can be produced.

It is advantageous that the active material forming products are formed under pressure for reducing electric resistance. However, drawbacks of such formation are such that diffusion of electrolytic ions is impeded and concentration polarization occurs, thereby lowering discharge voltage. As a solution to this, particles of water-soluble compound (e.g., sodium carbonate) are added to and mixed with active material mixture before shaping, and the resulting mixture is formed under pressure by press forming, tablet forming, extrusion molding, or the like so that the entire mixture becomes dense. Alternatively, the mixed powder is agitated to form active material forming products, which is then immersed in water. By extracting water-soluble compound, electrolytic ions easily permeate within the forming products through cavity corresponding to the compound, thereby inhibiting voltage reduction due to concentration polarization.

When alkali such as KOH, NaOH, LiOH or the like used as electrolyte is added to the active material mixture before shaping, the alkali is dissolved in an electrolytic solution or water and converted into electrolyte. Therefore, it is not necessary to perform extraction of the compound, which takes place when adding the water-soluble compound. By immersing the active material forming products in the electrolytic solution or water and dissolving alkali, the active material products with internal holes and small concentration polarization is obtained. Since the alkali such as KOH or NaOH is deliquescent, it is difficult to crush such material into particles under normal atmosphere. Assuming that crush and mixing are conducted under low humidity condition, KOH, NaOH, or the like may be used, but this is burdensome and expensive. On the other hand, such problem does not exist in water-soluble salts such as sodium carbonate, and the above method is simple and inexpensive. But performance of the electrolytic solution would be degraded unless such water-soluble salt is extracted and removed.

By using alkali-resistant resin stable in alkali as a binder and solidifying the active material products and the electrically conductive filler in contact, the forming products do not expand and collapse in alkali. Thereby, the shape of the forming products can be maintained, and therefore the active material products can stably maintain conductivity within alkaline electrolytic solution. Also, by solidifying nickel hydroxide and electrically conductive filler with a small amount of resin, nickel hydroxide particles become highly electrically conductive, while by solidifying particles with a small amount of resin, the electrolytic solution easily enters the forming products and electrolyte is smoothly supplied to the active material products during reaction of the active material products. In addition, since the shape of the active material products is maintained under this condition, conductivity of these and ion exchangeability between them can be maintained, and reactivity of the active material products can be stably maintained.

When particulate electrically conductive material such as carbon fine powder is used in large amount as the electrically conductive material, conductivity is improved indeed. But, large amount of resin is required to solidify the particulate electrically conductive material. This impedes permeation of ions within the solidified material and causes concentration polarization, thereby reducing an electromotive force. In order to increase conductivity within the forming products with less electrically conductive material, electrically conductive fiber material such as carbon fibers is advantageously used. This is because network is created by electric wires comprising electrically conductive fiber material within the particles, and nickel hydroxide is coupled to the network by means of the particulate electrically conductive material, thereby obtaining desired conductivity with less electrically conductive particles. By using the fiber material as the electrically conductive filler, high conductivity is gained with less electrically conductive material, and the entire forming products can be cured with a small amount of resin.

As the resin used as the binder, thermoplastic resin such as polyethylene, polypropylene, or ethylene vinyl acetate copolymer may be used. In this case, thermoplastic resin may be melted by heating and mixed with the active material powder or the like. But, when the resin is dissolved in a solvent and added to the active material powder, the resin tends to be uniformly dispersed in the active material powder, so that the active material mixture may be formed with a small amount of resin. For example, polyethylene, polypropylene, or ethylene vinyl acetate copolymer is soluble in a solvent such as heated benzene, toluene, or xylene. Also, styrene resin is soluble in acetone solvent. After the resin dissolved in any of these solvents is mixed with the active material and the electrically conductive filler, the solvent is removed by vaporization, thereby creating the active material products solidified by the resin.

As the reaction curing resin, epoxy resin, urethane resin, unsaturated polyester resin may be used as the binder. As thermosetting resin, phenol resin, or the like, may be used as the binder.

When using resin dissolved in a solvent soluble in water or alcohol, the solvent is extracted and removed by using the water or alcohol, thereby creating the active material products solidified by the resin. For example, polyether sulfone (PES) resin is soluble in dimethyl sulfoxide (DMSO). DMOS has a high boiling point. By removing DMSO by vaporization and solidifying resin dissolved in the solvent, β-nickel hydroxide loses its activity. When DMOS is used, the solvent is removed and cured by using an extraction material (in this case, water) in which the resin is not soluble but the solvent is soluble. So, the resin dissolved in the solvent may be mixed with nickel hydroxide and the electrically conductive filler, and the resulting forming products may be solidified in the extraction material (water). The resin obtained by curing PES dissolved in DMSO by DMSO removing method using water can be made porous, which favorably increases contact area between the electrolyte and the battery active material products.

When polystyrene dissolved in acetone is used as the resin, polyethylene is mixed with the active material products, and acetone is extracted by using water, thereby obtaining an active material products similar to the active material products solidified by PES. In the same manner, the method of extracting a solvent by using water is applicable to polysulfone dissolved in DMF or, DMSO, polyacrylonitrile dissolved in DMF, DMOS or ethylene carbonate, polyvinylidene fluoride dissolved in DMF, DMOS or NMP, polyamide dissolved in DMF or NMP, polyimide dissolved in DMF or NMP, or the like. As the resin soluble in an alcohol-soluble solvent, acetylcellulose dissolved in methylene chloride, oxide phenylene ether (PPO) dissolved in methylene chloride , or the like may be used.

When the resin dissolved in the solvent is mixed with the active material powder and the electrically conductive filler to allow active material forming products to be formed, a mixture of these may be agitated to form particles. The agitation can adjust the size of particles to be proper.

In forming the products, tablet making, tablet forming, pressurized forming, extrusion molding, or the like may be used. In order to increase contact area between the active material products and the electrically conductive filler, it is advantageous that the mixture is formed by pressurized forming. When using the tablet making, the tablet forming, the pressurized forming or the like, active material particles can be directly obtained. The particulate forming products obtained by the tablet making or the tablet forming, plate-shaped or particulate forming products obtained by pressurized forming, bar-shaped forming products obtained by extrusion molding, may be crushed into active material particles of proper size. The active material particles can be easily filled in cells constituted by electrodes and separators of the three-dimensional battery. If the active material products are degraded, the degraded active material products are discharged and recovered. The active material products are filled again, thus facilitating recycle without disassembling the battery. The discharged degraded active material products are separated from other battery components, and therefore can be easily recovered.

Typically, the crushed particles or the tablet particles are angular. If the angular particles are filled in the cells, filling density is low, or conductivity of particles is low. In order to solve this, the angular particles are favorably rounded to provide smooth surfaces. To this end, the active material particles or a mixture of the active material particles and other grinding medium is agitated to allow the angular particles to be rounded.

The filled layer of particles with filling density increased by the above method, has conductivity much lower than that of each particle. For this reason, a large current does not flow in such a filled layer. When an electrically conductive layer is formed on outer surfaces of particles by Ni plating, electrons from the active material products within the particles pass through the particles and then through the electrically conductive layer outside the particles and move to the electrodes (current collectors). During charge, in the reverse procedure, the cathode active material products receives electrons from the electrode quickly, thus allowing a large current to flow. When plating around the particles is thick, the particles are entirely covered with metal, so that the electrolytic solution does not go into the particles. For this reason, concentration polarization occurs due to concentration grade. As a result, battery performance is degraded.

To form the electrically conductive layer on the outer surfaces of the particles, coating by using Ni metal powder, Ni metal fibers, Ni metal foil, Ni plated fibers (carbon fibers, or organic fibers), Ni-plated particles, etc, may be conducted. Unlike previously-described plating, in this coating method, the particles are not entirely covered, and there are clearances between metal particles and between metal fibers, through which the electrolytic solution enters the particles. So, much coating does not degrade performance of the battery. In the coating method, the metal powder, metal fibers, or metal-plated fibers, is added to the particles before being cured, followed by rolling and agitation, thereby allowing any of the metal powder, metal fibers, or the metal-plated fibers to adhere to soft outer surfaces of the particles. In the case of particles solidified by the resin, for example, particles solidified by thermally-softened resin or resin soluble in a solvent, the particles is heated up to a high temperature so as to be softened, or the solvent is added to the particles to allow the particles to be expanded and softened to be thereby uncured. Then, metal is added to the uncured particles.

The particulate active material forming products are easily filled between the electrode and the separator in production of the three-dimensional battery. Conventionally, the nickel-hydrogen secondary battery needs to be disassembled into components for the purpose of recycling, because of its integral forming product. The particulate active material forming products filled in the electrode vessels can be immediately used as the battery. If the active material products are degraded, the active material forming products can be discharged without disassembling the battery. As a result, recycling is easily carried out by discharging, recovering, and re-filling the active material products.

The above description has been given of nickel hydroxide as the cathode active material products of the nickel-hydrogen secondary battery, but the present invention is not intended to be limited to this. In addition to hydrogen-occluding alloy as the anode active material of the nickel-hydrogen secondary battery, the present invention is applicable to known battery active material such as cadmium hydroxide, lead, lead dioxide, lithium, and further solid materials such as wood, graphite, carbon, iron ore, coal, charcoal, sand, gravel, silica, slag, or chaff.

Hereinbelow, examples of the present invention will be described along with comparative example.

### «Comparative Example 1»

150g of particulate graphite (acetylene black, ketchen black) was put into a Henschel mixer having an internal volume of 10 liters and agitated at 1000rpm for about 3 minutes to be sufficiently dispersed. Then, 1000g of nickel hydroxide powder for battery and 100g of nickel-plated carbon fiber 10mm chip were added to and mixed with the particulate graphite at 1000 rpm for about 3 minutes. Then, 150g of polyethylene as thermoplastic resin was added to and mixed with the particulate graphite for 10 minutes at a temperature of not lower than a softening temperature of resin and lower than 130°C. The resulting mixture was taken out and put into a metal mold of 2mm depth to be molded in the shape of board. The board-shaped mixture was cooled and then taken out from the metal mold. The molded board-shaped mixture was crushed by a hammer crusher. The crushed particles were sieved with a 2.88mm-mesh sieve and a 1mm-mesh sieve, thereby obtaining particles of a particular diameter of 1 to 2.88mm.

### «Comparative Example 2»

150g of particulate graphite (acetylene black, ketchen black) was put into the Henschel mixer having an internal volume of 10 liters and agitated at 1000rpm for about 3 minutes to be sufficiently dispersed. Then, 2500g of hydrogen-occluding alloy powder for battery was added to and mixed with the particulate graphite at 1000 rpm for about 3 minutes. Then, 150g of ethylene vinyl acetate copolymer as thermoplastic resin was added to and mixed with the particulate graphite for 10 minutes at a temperature of not lower than a softening temperature of resin and lower than 130°C. The resulting mixture was taken out and put into the metal mold of 2mm depth to be molded in the shape of board. The board-shaped mixture was cooled and then taken out from the metal mold. The molded board-shaped mixture was crushed into particles by a hammer crusher. The crushed particles were sieved with a 2.88mm-mesh sieve and a 1mm-mesh sieve, thereby obtaining particles of a particle diameter of 1 to 2.88mm.

### «Comparative Example 3»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. Resin dissolved in the heated xylene was added to a mixture of the nickel hydroxide powder and the electrically conductive filler which were heated to 60°C and agitated by the Henschel mixer while being kept at 60°C. Then, the Henschel mixer was cooled while agitating the mixture, and the mixture was cooled and crushed into powder. The powder was put into a high-speed mixer and entirely agitated by an agitator while adjusting the size of granulated particles by a chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm.

### «Comparative Example 4»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name; DONER S -247) were added to and mixed with the particulate graphite at 1000 rpm for about 3 minutes. 150g of ethylene vinyl acetate copolymer was added to and dissolved in 1000g of xylene heated to 60°C. Resin dissolved in the heated xylene was added to a mixture of the nickel hydroxide powder and the electrically conductive filler which were heated to 60°C and agitated by the Henschel mixer while being kept at 60°C. Then, the Henschel mixer was cooled while agitating the mixture, and the mixture was cooled and crushed into powder. The powder was put into the high-speed mixer and entirely agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, 50g of Ni-plated carbon fibers crushed to have an average length of approximately 200µm was added to the particles with agitation continued, and the resulting mixture was further agitated for 5 minutes. Thereafter, agitation was stopped while cooling the particles. The particles containing xylene, was put into a pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm.

### «Comparative Example 5»

150 g of particulate graphite (acetylene black, ketchen black) was put into the Henschel mixer having an internal volume of 10 liters and agitated at 1000rpm for about three minutes to be sufficiently dispersed. Then, 1000g of nickel hydroxide powder for battery and 100g of carbon fibers (trade name: DONER S - 247) were added to and mixed with the particulate graphite at 1000 rpm for about 3 minutes. 150 g of PES resin was added to and dissolved in 2000g of DMSO. The mixture of the nickel hydroxide powder and the electrically conductive filler was put into the high-speed mixer and agitated by an agitator, and PES resin dissolved in DMSO was added while adjusting the size of the granulated particles by the chopper. The mixture was agitated under the condition in which the high-speed mixer had a volume of 2 liters, the number of rotations of the agitator was 600rpm, and the number of rotations of the chopper was 1500 rpm. After formation of the granulated particles, 50g of Ni-plated carbon fiber crushed to have an average length of approximately 200µm was added to the particles with agitation continued, and further, the resulting mixture was agitated for 5 minutes. Then, agitation was stopped while cooling the particles. The particles containing DMSO, was put into water of 10 liters, to remove DMSO. The particles were taken out and dried. Then, the particles were sieved with a 2.88mm-mesh sieve and a 1mm-mesh sieve, thereby obtaining particles of a particle diameter of 1 to 2.88mm.

### «Comparative Example 6»

150g of particulate graphite (acetylene black, ketchen black) was put into the Henschel mixer having an internal volume of 10 liters and agitated at 1000rpm for about 3 minutes to be sufficiently dispersed. Then, 2500g of hydrogen-occluding alloy powder for battery and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. Resin dissolved in the heated xylene was added to a mixture of the hydrogen-occluding alloy and the electrically conductive filler which were heated to 60°C and agitated by the Henschel mixer while being kept at 60°C. Then, the Henschel mixer was cooled while agitating the mixture, and the mixture was cooled and crushed into powder. The powder was put into the high-speed mixer and agitated by an agitator while adjusting the size of the granulated particles by the chopper. The powder was agitated under the condition in which the high-speed mixer had a volume of 2 liters, the number of rotations of the agitator was 600rpm, and the number rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm.

### «Comparative Example 7»

150g of particulate graphite (acetylene black, ketchen black) was put into the Henschel mixer having an internal volume of 10 liters and agitated at 1000rpm for about 3 minutes to be sufficiently dispersed. Then, 2500g of hydrogen-occluding alloy powder for battery and 100g of carbon fibers (trade name: DONE S - 247) were added to and mixed with the particulate graphite at 1000 rpm for about 3 minutes. 150g of PES resin was added to and dissolved in 2000g of DMSO. The mixture of the hydrogen-occluding alloy powder and the electrically conductive filler was put into the high-speed mixer and entirely agitated by the agitator, and PES resin dissolved in DMSO was added while adjusting the size of the granulated particles by the chopper. The mixture was agitated under the condition in which the high-speed mixer had a volume of 2 liters, the number of rotations of the agitator was 600rpm, and the number of rotations of the chopper was 1500 rpm. After formation of the granulated particles, the high-speed mixer was stopped. The particles containing DMSO, was put into water of 10 liters, to remove DMSO. The particles were taken out and dried. Then, the particles were sieved with a 2.88mm-mesh sieve and a 1mm-mesh sieve, thereby obtaining particles of a particle diameter of 1 to 2.88mm.

### «Example 1»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S-247) were added to and mixed with the particulate graphite at 1000 rpm for about 3 minutes. Then, 100g of sodium carbonate particles of a particle diameter of approximately 500µm was added to the mixed powder and sufficiently mixed. 150g of ethylene vinyl acetate copolymer was added to and dissolved in 1000g of xylene heated to 60°C. Resin dissolved in the heated xylene was added to a mixture of the nickel hydroxide powder, the electrically conductive filler and the sodium carbonate which were heated to 60°C and agitated by the Henschel mixer while being kept at 60°C. Then, the Henschel mixer was cooled while agitating the mixture, and the mixture was cooled and crushed into powder. The powder was put into a high-speed mixer and entirely agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into the pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm. The particles were put into water of 10 liters and sodium carbonate taken in the particles were extracted and removed from the particles. Thereafter, the particles were cleaned by water to allow adhering sodium carbonate to be completely removed, and dried, thus creating a product.

### «Example 2»

150g of particulate graphite (acetylene black, ketchen black) was put into the Henschel mixer having an internal volume of 10 liters and agitated at 100orpm for about 3 minutes to be sufficiently dispersed. Then, 1000g of nickel hydroxide powder for battery and 100g of carbon fibers (trade name: DONER S-247) were added to and mixed with the particulate graphite at 1000 rpm for about 3 minutes. Then, 100g of potassium hydroxide (KOH) particles of a particle diameter of approximately 500µm was added to the mixed powder and sufficiently mixed. 150g of ethylene vinyl acetate copolymer was added to and dissolved in 1000g of xylene heated to 60°C. Resin dissolved in the heated xylene was added to a mixture of the nickel hydroxide powder, the electrically conductive filler and KOH which were heated to 60°C and agitated by the Henschel mixer while being kept at 60°C. Then, the Henschel mixer was cooled while agitating the mixture, and the mixture was cooled and crushed into powder. The powder was put into a high-speed mixer and entirely agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into the pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm. KOH taken in the particles is dissolved in an electrolytic solution or water to be converted into a part of an electrolyte when the particles are filled in the battery. Operation for handling potassium hydroxide was carried out under dry atmosphere since potassium hydroxide suctioned water contained in air and became deliquescent.

### «Comparative Example 8»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S - 247) were added to and mixed with the particulate graphite at 1000 rpm for about 3 minutes. Then, 150g of phenol resin was added to and mixed with the particulate graphite for 10 minutes. The resulting mixture in a particle condition or wet powder condition was taken out and put into a container. The mixture was formed under pressure while phenol resin was heated up to a solidifying temperature (115°C). The particles formed under pressure was cooled and then taken out from the container, thus creating a product.

### «Comparative Example 9»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONERS -247) were added to and mixed with the particulate graphite at 1000 rpm for about 3 minutes. Then, 150g of polypropylene as thermoplastic resin was added to and mixed with the particulate graphite for 10 minutes at a temperature of not lower than a softening temperature of resin and lower than 130°C. The resulting mixture was taken out and put into a container to be formed under pressure by heating. The mixture was cooled and then taken out from the container, thus creating a product.

### «Comparative Example 10»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. Resin dissolved in the heated xylene was added to a mixture of the nickel hydroxide powder and the electrically conductive filler which were heated to 60°C and agitated by the Henschel mixer while being kept at 60°C. The mixture was taken out and heated to 50°C under a reduced pressure to allow xylene to be vaporized. Then, the mixture was cooled to be solidified. The solidified mixture was crushed into particles. In order to increase filling density, the crushed particles were agitated and ground, thereby providing smooth particles. Such particles can increase filling density when used as a product.

### «Comparative Example 11»

150g of particulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S - 247) were added to and mixed with the particulate graphite at 1000 rpm for about 3 minutes. 150g of PES resin was added to and dissolved in 2000g of DMSO. PES resin dissolved in DMSO was added to the mixture of the nickel hydroxide powder and the electrically conductive filler and agitated to be formed into slurry. The slurry was dropped into the container containing water to be formed into particles of several millimeters. Then, DMSO was extracted and removed in water and the resulting solidified particles were dried into a product.

### «Example 3»

150g ofparticulate graphite (acetylene black, ketchen black) was put into the Henschel mixer having an internal volume of 10 liters and agitated at 1000rpm for about 3 minutes to be sufficiently dispersed. Then, 1000g of nickel hydroxide powder for battery and 100g of carbon fibers (trade name: DONER S - 247) were added to and mixed with the particulate graphite at 1000 rpm for about 3 minutes. 150 of ethylene vinyl acetate copolymer was added to and dissolved in 1000g of xylene heated to 60°C. The resin dissolved in the heated xylene was added to the mixture of the nickel hydroxide powder and the electrically conductive filler which were heated to 60°C and agitated while being kept at 60°C. KOH crushed in dry atmosphere was classified by a sieve having a sieve size of 500pm, and KOH particles of a particle diameter of 500µm or less were added to and sufficiently mixed with the mixture. The mixture was taken out and heated to 50°C under a reduced pressure to allow xylene to be vaporized. Then, the mixture was cooled to be solidified. The solidified mixture was crushed into particles. In order to increase filling density, the crushed particles were agitated and ground, thereby providing smooth particles. Such particles can increase filling density when used as a product. KOH taken in the particles is dissolved in electrolytic solution or water to be converted into part of electrolyte when the particles are filled in the battery.

### «Comparative Example 12»

Crushed carbon black was added to nickel nitrate solution and sufficiently dispersed. Caustic soda dissolved in water was added to the solution being well-agitated, thereby producing nickel hydroxide and carbon fine particles in a mixed state. The solution was kept stationary and a product was precipitated. Then, by tilting the container, supernatant was removed, and water was added and mixed, This operation was repeated until pH of the supernatant became approximately 7 and the precipitate was cleaned. The precipitate was filtered, dried, and crushed as desired, thereby producing nickel hydroxide powder comprising carbon fine particles. This is applicable to the above example as the nickel hydroxide powder for battery.

### «Comparative Example 13»

The particulate active material products were produced by the methods of the examples 3 and 12 and nickel-plating was applied to surfaces of the particles. The step is as follows. 200g of the particles was immersed in 100cc of alkaline cleaning agent (sigma clean) 10% aqueous solution and sufficiently cleaned. Then, the particles were immersed in 100cc of alkaline chromate solution for 2 seconds to allow surfaces of the particles to be etched, and then cleaned by using water. Following this, catalytic process, activation process, and chemical plating process, were carried out. The catalytic process was carried out in such a manner that the particles were immersed for 3 minutes in a solution which is obtained by well mixing 20cc of MAT1-A (produced by Uemura Kogakusya), 10cc of MAT1- B (produced by Uemura Kogakusya), and 70cc of water and adjusted to have pH 11 by NaOH, thereby causing Pd catalyst to be carried on the particles. The activation process was carried out in such a manner that the particles with catalyst carried thereon were immersed for 5 minutes in a solution obtained by mixing 1.8cc of MRD2 -A (produced by Uemura Kogakusya) and 15cc of MRD2 - B (produced by Uemura Kogakusya) with 80cc of water and adjusted to have pH 12. 7 by NaOH, thereby reducing Pd catalyst. The chemical plating was carried out in such a manner that particles that were subjected to the activation process were immersed for 7 minutes in a solution which is obtained by mixing 400cc of water with 100cc of nibodule u - 77 (produced by Uemura Kogakusya) and adjusted to have pH 9 by ammonia water, thereby applying nickel-plating to the surfaces of the particles. In each of the above processes, the particles were sufficiently cleaned by using water.

### «Comparative Example 14»

The particulate active material products were produced by the method of the examples 3 and 12. Toluene was added to and impregnated in the particles to allow surfaces thereof to be expanded and softened. Nickel metal powder of particle weight of 10% was added to the expanded and softened particles and the particles were coated with Ni metal powder by a rolling method.

### «Comparative Example 15»

The particulate active material products were produced by the method of the examples 3 and 12. Toluene was added to and impregnated in the particles to allow surfaces thereof to be expanded and softened. Crushed carbon fibers (diameter of 7µm, average fiber length of approximately 100µm, and average plating thickness of 0.2µm) nickel-plated at particle weight of 5% were added to the expanded and softened particles. The particles were coated with Ni-plated carbon fiber powder by the rolling method.

### «Comparative Example 16»

150g of particulate graphite (acetylene black) was put into the Henschel mixer having an internal volume of 10 liters and agitated at 1000rpm for about 3 minutes to be sufficiently dispersed. Then, 1000g of sand (toyoura standard sand) and 100g of carbon fibers (trade name: DONER S - 247) were added to and mixed with the particulate graphite at 1000 rpm for about 3 minutes. 150g of ethylene vinyl acetate copolymer was added to and dissolved in 1000g of xylene heated to 60°C. Resin dissolved in heated xylene was added to the mixture of the sand and electrically conductive filler which were heated to 60°C and agitated by the Henschel mixer while being kept at 60°C. Then, the Henschel mixer was cooled while agitating the particles, and the mixture was cooled and crushed into powder. The powder was put into a high-speed mixer and agitated by an agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C, to remove xylene. The particles were taken out and dried. Then, the particles were sieved with a 2.88mm-mesh sieve and a 1mm-mesh sieve, thereby obtaining particles of a particle diameter of 1 to 2.88mm.

### «Comparative Example 17»

150 g of particulate graphite (acetylene black) was put into the Henschel mixer having an internal volume of 10 liters and agitated at 1000rpm for about 3 minutes to be sufficiently dispersed. Then, 1000g of coal particles (fine powder coal of Daidousumi) and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. Resin dissolved in the heated xylene was added to a mixture of the coal and the electrically conductive filler which were heated to 60°C and agitated by the Henschel mixer while being kept at 60°C. Then, the Henschel mixer was cooled while agitating the mixture, and the mixture was cooled and crushed into powder. The powder was put into the high-speed mixer and agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm.

### «Comparative Example 18»

150 g of particulate graphite (acetylene black) was put into the Henschel mixer having an internal volume of 10 liters and agitated at 1000rpm for about 3 minutes to be sufficiently dispersed. Then, 1000g of charcoal (obtained by calcining wood at 600°C for 2 hours) and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. The resin dissolved in the heated xylene was added to the mixture of the charcoal and the electrically conductive filler which were heated to 60°C and agitated by the Henschel mixer while being kept at 60°C. Then, the Henschel mixer was cooled while agitating the mixture, and the mixture was cooled and crushed into powder. The powder was put into the high-speed mixer and agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C, to remove xylene. The particles were cooled and then sieved with a 2.88mm-mesh sieve and a 1mm-mesh sieve, thereby obtaining the particles of a particle diameter of 1 to 2.88mm.

### «Comparative Example 19»

150 g of particulate graphite (acetylene black) was put into the Henschel mixer having an internal volume of 10 liters and agitated at 1000rpm for about 3 minutes to be sufficiently dispersed. Then, 500g of silica (obtained by calcining chaff at 600°C for 2 hours) and 100g of carbon fibers (trade name: DONER S -247) were added to and mixed with the particulate graphite at 1000 rpm for about 3 minutes. 150g of ethylene vinyl acetate copolymer was added to and dissolved in 1000g of xylene heated to 60°C. The resin dissolved in the heated xylene was added to the mixture of the charcoal and the electrically conductive filler which were heated to 60°C and agitated by the Henschel mixer while being kept at 60°C. Then, the Henschel mixer was cooled while agitating the mixture, and the mixture was cooled and crushed into powder. The powder was put into the high-speed mixer and agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into the pressure-reducing drier and heated to 50°C, to remove xylene. The particles were cooled and then sieved with a 2.88mm-mesh sieve and a 1mm-mesh sieve, thereby obtaining particles of a particle diameter of 1 to 2.88mm.

### «Comparative Example 20»

150g of particulate graphite (acetylene black) was put into the Henschel mixer having an internal volume of 10 liters and agitated at 1000rpm for about 3 minutes to be sufficiently dispersed. Then, 1000g of slag (obtained by melting ash of burned garbage at 1500°C for 2 hours and then by cooling the ash) and 100g of carbon fibers (trade name: DONER S -247) were added to and mixed with the particulate graphite. 150g of ethylene vinyl acetate copolymer was added to and dissolved in 1000g of xylene heated to 60°C. The resin dissolved in the heated xylene was added to the mixture of the slag and the electrically conductive filler which were heated at 60°C and agitated by the Henschel mixer while being kept at 60°C. Then, the Henschel mixer was cooled while agitating the mixture, and the mixture was cooled and crushed into powder. The powder was put into the high-speed mixer and agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into a pressure-reducing drier and heated to 50°C. to remove xylene. The particles were cooled and then sieved with a 2.88mm-mesh sieve and a 1mm-mesh sieve, thereby obtaining particles of a particle diameter of 1 to 2.88mm.

### «Comparative Example 21»

150g of particulate graphite (acetylene black) was put into the Henschel mixer having an internal volume of 10 liters and agitated at 1000rpm for about 3 minutes to be sufficiently dispersed. Then, 500g of carbon (obtained by calcining carbon fibers at 1100°C) was added to and mixed with the particulate graphite at 1000 rpm for about 3 minutes. 150g of ethylene vinyl acetate copolymer was added to and dissolved in 1000g of xylene heated at 60°C. The resin dissolved in the heated xylene was added to the mixture of the carbon and the electrically conductive filler which were heated to 60°C and agitated by the Henschel mixer while being kept to 60°C. Then, the Henschel mixer was cooled while agitating the mixture, and the mixture was cooled and crushed into powder. The powder was put into the high-speed mixer and agitated by the agitator while adjusting the size of the granulated particles by the chopper. The powder was agitated under the condition in which the high-speed mixer had a volume of 2 liters, the number of rotations of the agitator was 600rpm, and the number of rotations of the chopper was 1500 rpm, and temperature of the powder was increased from room temperature to 50°C. After formation of the granulated particles, agitation was stopped while cooling the granulated particles. The particles containing xylene, was put into the pressure-reducing drier and heated to 50°C. to remove xylene. The particles were cooled and then sieved with a 2.88mm-mesh sieve and a 1mm-mesh sieve, thereby obtaining particles of a particle diameter of 1 to 2.88mm.

### [Industrial Applicability]

The present invention described above is suitable for use as the active material products for battery of the chargeable and dischargeable three-dimensional battery obtained by filling particulate, plate-shaped or bar-shaped active material products.

## Claims

1. A method of producing active material products for battery for use in a three-dimensional battery comprising two vessels connected to each other with a member interposed therebetween, and electrically conductive current collectors provided within the two vessels in contact with active material particles or active material forming products contained in electrolytic solutions filled in the two vessels, the member being configured to permit passage of an ion and not to permit passage of an electron, and the active material particles or the active material forming products filled in the electrolytic solution in one of the two vessels being adapted to discharge electrons and the active material particles or the active material forming products filled in the electrolytic solution in the other vessel being adapted to absorb the electrons, the method comprising:
adding a water-soluble compound besides electrically conductive filler and resin to an active material powder and
forming and curing the active material powder in a shape of particle, plate, or bar to obtain particulate, plate-shaped or bar-shaped active material products and
dissolving the water-soluble compound in water, and extracting and removing the water-soluble compound, thereby forming pores in the active material forming products.

2. A method of producing active material products for battery for use in a three-dimensional battery comprising two vessels connected to each other with a member interposed therebetween, and electrically conductive current collectors provided within the two vessels in contact with active material particles or active material forming products contained in electrolytic solutions filled in the two vessels, the member being configured to permit passage of an ion and not to permit passage of an electron, and the active material particles or the active material forming products filled in the electrolytic solution in one of the two vessels being adapted to discharge electrons and the active material particles or the active material forming products filled in the electrolytic solution in the other vessel being adapted to absorb the electrons, the method comprising:
adding particles of a compound, which is converted into an electrolyte in the battery, besides electrically conductive filler and resin to an active material powder and
forming and curing the active material powder in a shape of particle, plate, or bar to obtain particulate, plate-shaped or bar-shaped active material products and
forming pores in the active material forming products by the dissolution of the electrolyte contained in the electrolytic solution or water when the active material products are used for the battery.

3. A method of producing active material products according to claim 1 or claim 2 wherein the active material powder is a nickel hydroxide powder obtained from a precipitate of nickel hydroxide and cobalt hydroxide obtained by neutralizing a mixed solution containing nickel salt and a minute amount of cobalt salt by alkali.

4. A method of producing active material products according to claim 1 or claim 2 wherein the active material powder is a nickel hydroxide powder obtained from a mixture comprising a precipitate of nickel hydroxide and carbon particles which is obtained by neutralizing a nickel salt solution with carbon particles suspended therein by alkali.

5. A method of producing active material products according to claim 1 or claim 2 wherein the active material powder is a nickel hydroxide powder obtained from a mixture of nickel hydroxide, and cobalt hydroxide and carbon particles which are precipitated by neutralizing a mixed solution containing nickel salt and a minute amount of cobalt salt with carbon particles suspended therein by alkali.

6. The method of producing active material products according to Claim 1, wherein after mixing the active material powder and the electrically conductive filler with the thermoplastic resin dissolved in a solvent and dispersing a mixture of the active material powder, the electrically conductive filler, and the thermoplastic resin, the solvent is vaporized, and the active material products arc formed to obtain particulate, plate-shaped or bar-shaped active material products.

7. The method of producing active material products for battery according to Claim 6, wherein the resin dissolved on the solvent is added to the active material powder and the electrically conductive filler, and a mixture of the active material powder, the electrically conductive filler, and the resin is granulated under agitation to be formed into active material particles.

8. The method of producing active material products for battery according to any one of Claims 1 to 5, wherein the articulate active material products are formed and cured by tablet making.

9. The method of producing active material products for battery according to any one of Claims 1 to 5, wherein the particulate, plate-shaped, or bar-shaped active material products are formed and cured by pressurized forming.

10. The method of producing active material products for battery according to any one of Claims 1 to 5, wherein the bar-shaped active material products are formed and cured by extrusion molding.

11. A method of producing active material products according to any one of claims 1 to 10
wherein at least any one selected from carbon fibers, nickel-plated carbon fibers, carbon particles, nickel-plated carbon particles, niekel-plated organic fibers, fibrous nickel, nickel particles and nickel foil is coated on surfaces of the cured active material products.

## Patentansprüche

1. Verfahren zum Herstellen von aktiven Materialprodukten für Batterien zur Verwendung in einer dreidimensionalen Batterie, die zwei Gefäße, welche miteinander mit einem Element, das dazwischen angeordnet ist, verbunden sind, und elektrisch leitfähige Stromabnehmer umfasst, die in den zwei Gefäßen in Kontakt mit Teilchen aus aktivem Material oder aktivem Material bereitgestellt sind, das Produkte bildet, welche in elektrolytischen Lösungen enthalten sind, die in die zwei Gefäße gefüllt sind, wobei das Element so ausgelegt ist, dass es den Durchgang eines Ions ermöglicht und den Durchgang eines Elektrons nicht ermöglicht und wobei die Teilchen aus aktivem Material oder das aktive Material, das Produkte bildet, die in die elektrolytische Lösung in einem der zwei Gefäße gefüllt sind, zum Abgeben von Elektronen ausgelegt ist, und die Teilchen des aktiven Materials oder das aktive Material, das Produkte bildet, die in die elektrolytische Lösung im anderen Gefäß gefüllt sind, zum Aufnehmen der Elektronen ausgelegt ist, wobei das Verfahren Folgendes umfasst:
Hinzufügen einer wasserlöslichen Verbindung, neben einem elektrisch leitfähigen Füllstoff und Harz, zu einem Pulver aus aktivem Material; und
Bilden und Härten des Pulvers aus aktivem Material in Form von Teilchen, einer Platte oder eines Stabes, um teilchenförmige, plattenförmige oder stabförmige Produkte aus aktivem Material zu erhalten; und
Auflösen der wasserlöslichen Verbindung in Wasser und Extrahieren und Entfernen der wasserlöslichen Verbindung, **dadurch** Bilden von Poren im aktiven Material, das Produkte bildet.

2. Verfahren zum Herstellen von aktiven Materialprodukten für Batterien zur Verwendung in einer dreidimensionalen Batterie, die zwei Gefäße, welche miteinander mit einem Element, das dazwischen angeordnet ist, verbunden sind, und elektrisch leitfähige Stromabnehmer umfasst, die in den zwei Gefäßen in Kontakt mit Teilchen aus aktivem Material oder aktivem Material bereitgestellt sind, das Produkte bildet, welche in elektrolytischen Lösungen enthalten sind, die in die zwei Gefäße gefüllt sind, wobei das Element so ausgelegt ist, dass es den Durchgang eines Ions ermöglicht und den Durchgang eines Elektrons nicht ermöglicht und wobei die Teilchen aus aktivem Material oder das aktive Material, das Produkte bildet, die in die elektrolytische Lösung in einem der zwei Gefäße gefüllt sind, zum Abgeben von Elektronen ausgelegt ist, und die Teilchen des aktiven Materials oder das aktive Material, das Produkte bildet, die in die elektrolytische Lösung im anderen Gefäß gefüllt sind, zum Aufnehmen der Elektronen ausgelegt ist, wobei das Verfahren Folgendes umfasst:
Hinzufügen von Teilchen einer Verbindung, die in einen Elektrolyten in der Batterie umgewandelt ist, zusätzlich zu einem elektrisch leitfähigen Füllstoff und Harz, zu einem Pulver aus aktivem Material; und
Formen und Härten des Pulvers aus aktivem Material in Form von Teilchen, einer Platte oder eines Stabes, um teilchenförmige, plattenförmige oder stabförmige Produkte aus aktivem Material zu erhalten; und
Bilden von Poren im aktiven Material, das Produkte bildet, durch Auflösen des Elektrolyten, der in der elektrolytischen Lösung oder Wasser enthalten ist, wenn die Produkte aus aktivem Material für die Batterie verwendet werden.

3. Verfahren zum Herstellen von Produkten aus aktivem Material gemäß Anspruch 1 oder Anspruch 2, wobei das aktive Materialpulver ein Nickelhydroxidpulver ist, das aus einem Niederschlag von Nickelhydroxid und Kobalthydroxid erhalten ist, welches durch Neutralisieren einer gemischten Lösung, die Nickelsalz und eine winzige Menge Kobaltsalz enthält, durch Alkali erhalten ist.

4. Verfahren zum Herstellen von aktiven Materialprodukten nach Anspruch 1 oder Anspruch 2, wobei das aktive Materialpulver ein Nickelhydroxidpulver ist, welches aus einer Mischung erhalten ist, die einen Niederschlag von Nickelhydroxid und Kohlenstoffteilchen umfasst, welcher durch Neutralisieren einer Nickelsalzlösung mit Kohlenstoffteilchen, die darin suspendiert sind, durch Alkali erhalten ist.

5. Verfahren zum Herstellen von aktiven Materialprodukten gemäß Anspruch 1 oder Anspruch 2, wobei das aktive Materialpulver ein Nickelhydroxidpulver ist, das aus einer Mischung von Nickelhydroxid und Kobalthydroxid und Kohlenstoffteilchen erhalten ist, welche durch Neutralisieren einer gemischten Lösung, die Nickelsalz und eine winzige Menge Kobaltsalz mit Kohlenstoffteilchen, die darin suspendiert sind, enthält, durch Alkali erhalten ist.

6. Verfahren zum Herstellen von aktiven Materialprodukten nach Anspruch 1, wobei nach dem Mischen des aktiven Materialpulvers und des elektrisch leitfähigen Füllstoffs mit dem thermoplastischen Harz, das in einem Lösungsmittel aufgelöst ist, und dem Dispergieren einer Mischung aus aktivem Materialpulver, elektrisch leitfähigem Füllstoff und thermoplastischem Harz das Lösungsmittel verdampft ist und die aktiven Materialprodukte gebildet sind, um partikelförmige, plattenförmige oder stabförmige aktive Materialprodukte zu erhalten.

7. Verfahren zum Herstellen von aktiven Materialprodukten für Batterien nach Anspruch 6, wobei das Harz, welches im Lösungsmittel gelöst ist, dem aktiven Materialpulver und dem elektrisch leitfähigen Füllstoff zugesetzt ist, und eine Mischung aus dem aktiven Materialpulver, dem elektrisch leitfähigen Füllstoff und dem Harz unter Rühren granuliert ist, um so zu aktiven Materialteilchen geformt zu werden.

8. Verfahren zum Herstellen von aktiven Materialprodukten für Batterien nach einem der Ansprüche 1 bis 5, wobei die partikelförmigen aktiven Materialprodukte durch Tablettieren gebildet und gehärtet sind.

9. Verfahren zum Herstellen von aktiven Materialprodukten für Batterien nach einem der Ansprüche 1 bis 5, wobei die partikelförmigen, plattenförmigen oder stabförmigen aktiven Materialprodukte durch Druckformen gebildet und gehärtet sind.

10. Verfahren zum Herstellen von aktiven Materialprodukten für Batterien nach einem der Ansprüche 1 bis 5, wobei die stabförmigen aktiven Materialprodukte durch Extrudieren gebildet und gehärtet sind.

11. Verfahren zum Herstellen von aktiven Materialprodukten nach einem der Ansprüche 1 bis 10, wobei mindestens ein Element, das aus Kohlenstofffasern, nickelbeschichteten Kohlenstofffasern, Kohlenstoffteilchen, nickelbeschichteten Kohlenstoffteilchen, nickelbeschichteten organischen Fasern, faserartigem Nickel, Nickelteilchen und Nickelfolie ausgewählt ist, die Oberflächen der gehärteten aktiven Materialprodukte bedeckt.

## Revendications

1. Procédé de production de produits en matière active pour batterie pour utilisation dans une batterie tridimensionnelle comprenant deux récipients reliés l'un à l'autre, un élément étant interposé entre ces derniers, et des collecteurs de courant électriquement conducteurs disposés à l'intérieur des deux récipients en contact avec des particules de matière active ou des produits formant une matière active contenus dans des solutions électrolytiques dont sont remplis les deux récipients, l'élément étant configuré pour permettre le passage d'un ion et ne pas permettre le passage d'un électron, et les particules de matière active ou les produits formant une matière active, présents dans la solution électrolytique dans l'un des deux récipients étant adaptés pour décharger des électrons, et les particules de matière active ou les produits formant une matière active, présents dans la solution électrolytique dans l'autre récipient étant adaptés pour absorber les électrons, le procédé comprenant :
l'ajout d'un composé hydrosoluble en plus d'un produit de remplissage électriquement conducteur et d'une résine, à une poudre de matière active, et
le façonnage et la cuisson de la poudre de matière active sous la forme de particule, de plaque, ou de barre pour obtenir des produits en matière active particulaires, en forme de plaque ou en forme de barre, et
la dissolution dans de l'eau du composé hydrosoluble, et l'extraction et l'élimination du composé hydrosoluble, en formant ainsi des pores dans les produits formant une matière active.

2. Procédé de production de produits en matière active pour batterie pour utilisation dans une batterie tridimensionnelle comprenant deux récipients reliés l'un à l'autre, un élément étant interposé entre ces derniers, et des collecteurs de courant électriquement conducteurs disposés à l'intérieur des deux récipients en contact avec des particules de matière active ou des produits formant une matière active, contenus dans des solutions électrolytiques dont sont remplis les deux récipients, l'élément étant configuré pour permettre le passage d'un ion et ne pas permettre le passage d'un électron, et les particules de matière active ou les produits formant une matière active présents dans la solution électrolytique dans l'un des deux récipients étant adaptés pour décharger des électrons, et les particules de matière active ou les produits formant une matière active présents dans la solution électrolytique dans l'autre récipient étant adaptés pour absorber les électrons, le procédé comprenant :
l'ajout de particules d'un composé, qui est transformé en un électrolyte dans la batterie, en plus d'un produit de remplissage électriquement conducteur et d'une résine, à une poudre de matière active, et
le façonnage et la cuisson de la poudre de matière active sous la forme de particule, de plaque, ou de barre pour obtenir des produits en matière active particulaires, en forme de plaque ou en forme de barre, et
la formation de pores dans les produits formant une matière active par la dissolution de l'électrolyte contenu dans la solution d'électrolyte ou dans l'eau lorsque les produits en matière active sont utilisés pour la batterie.

3. Procédé de production de produits en matière active selon la revendication 1 ou la revendication 2, dans lequel la poudre de matière active est une poudre d'hydroxyde de nickel obtenue à partir d'un précipité d'hydroxyde de nickel et d'hydroxyde de cobalt obtenu en neutralisant une solution mixte contenant du sel de nickel et une quantité infime de sel de cobalt, par un alcali.

4. Procédé de production de produits en matière active selon la revendication 1 ou la revendication 2, dans lequel la poudre de matière active est une poudre d'hydroxyde de nickel obtenue à partir d'un mélange comprenant un précipité d'hydroxyde de nickel et des particules de carbone, qui est obtenu en neutralisant une solution de sel de nickel avec des particules de carbone en suspension en son sein, par un alcali.

5. Procédé de production de produits en matière active selon la revendication 1 ou la revendication 2, dans lequel la poudre de matière active est une poudre d'hydroxyde de nickel obtenue à partir d'un mélange d'hydroxyde de nickel, et d'hydroxyde de cobalt et de particules de carbone qui sont précipitées en neutralisant une solution mixte contenant un sel de nickel et une quantité infime de sel de cobalt avec des particules de carbone en suspension en son sein, par un alcali.

6. Procédé de production de produits en matière active selon la revendication 1, dans lequel, après le mélange de la poudre de matière active et du produit de remplissage électriquement conducteur avec la résine thermoplastique dissoute dans un solvant et la dispersion d'un mélange de la poudre de matière active, du produit de remplissage électriquement conducteur et de la résine thermoplastique, le solvant est vaporisé, et les produits en matière active sont formés pour obtenir des produits en matière active particulaires, en forme de plaque ou en forme de barre.

7. Procédé de production de produits en matière active pour batterie selon la revendication 6, dans lequel la résine dissoute dans le solvant est ajoutée à la poudre de matière active et au produit de remplissage électriquement conducteur, et un mélange de la poudre de matière active, au produit de remplissage électriquement conducteur, et de la résine est granulé sous agitation pour être amené sous la forme de particules de matière active.

8. Procédé de production de produits en matière active pour batterie selon l'une quelconque des revendications 1 à 5, dans lequel les produits en matière active particulaires sont formés et cuits par pastillage.

9. Procédé de production de produits en matière active pour batterie selon l'une quelconque des revendications 1 à 5, dans lequel les produits en matière active articulaires, en forme de plaque, ou en forme de barre sont façonnés et cuits par formage sous pression.

10. Procédé de production de produits en matière active pour batterie selon l'une quelconque des revendications 1 à 5, dans lequel les produits en matière active en forme de barre sont façonnés et cuits par moulage par extrusion.

11. Procédé de production de produits en matière active selon l'une quelconque des revendications 1 à 10,
dans lequel au moins l'un quelconque sélectionné parmi des fibres de carbone, des fibres de carbone nickelées, des particules de carbone, des particules de carbone nickelées, des fibres organiques nickelées, du nickel fibreux, des particules de nickel et une feuille de nickel, est appliqué en revêtement sur des surfaces des produits en matière active cuits.
